# EUROPÄISCHE PATENTANMELDUNG

(11) **EP 4 335 296 A2**
(43) Veröffentlichungstag der Anmeldung: **13.03.2024**
(21) Anmeldenummer: 24153430.4
(22) Anmeldetag: 03.09.2018
(51) Int. Cl.: A22C 21/00

(54) **ANORDNUNG UND VERFAHREN ZUR GEFLÜGELFÖRDERUNG**

(62) Teilanmeldung aus: 18765100.5
(71) Anmelder: FPI Food Processing Innovation GmbH & Co. Kg, 23556 Lübeck (DE)
(72) Erfinder: Schlesiger, Oliver, 23554 Lübeck (DE)
(74) Vertreter: Stork Bamberger Patentanwälte PartmbB

(57) **Zusammenfassung**

Die vorliegende Erfindung betrifft eine Anordnung, eine Vorrichtung und ein Verfahren zur Geflügelförderung. Die erfindungsgemäße Anordnung ist zur Übergabe von Schlachtgeflügel zwischen Förderlinien in einer Geflügelbearbeitungsanlage ausgebildet und umfasst mindestens eine Rundläufereinrichtung (10, 11) zur Hängeförderung von Schlachtgeflügel entlang einer gekrümmten Förderstrecke mit einer Mehrzahl von jeweils zum beidbeinigen Halten eines Geflügelkörpers (12) eingerichteten Hängeaufnahmen (13), eine Linearmotor-Fördereinrichtung (16) mit einer einen Linearantrieb umfassenden, eine umlaufende Förderstrecke (17) bildenden Führungsschiene (18) mit einer Mehrzahl entlang der Führungsschiene (18) mittels des Linearantriebs jeweils separat steuerbewegbar angeordneten Läufern (19) sowie zur Aufnahme jeweils eines Geflügelbeines (21) eingerichtete Halteelemente (20), wobei an jedem der Läufer (19) jeweils eines der Halteelemente(20) angeordnet ist, wobei die Rundläufereinrichtung (10, 11) und die Linearmotor-Fördereinrichtung (16) derart angeordnet sind, dass die gekrümmte Förderstrecke in einem Überführungsbereich (22) mit einem Kurvenabschnitt der umlaufenden Förderstrecke (17) zur Übergabe des Schlachtgeflügels zwischen den Förderlinien zumindest teilweise überlappt.

## Beschreibung

Die vorliegende Erfindung betrifft eine Anordnung sowie ein Verfahren zur Übergabe von Schlachtgeflügel zwischen Förderlinien in einer Geflügelbearbeitungsanlage.

Des Weiteren betrifft die Erfindung eine Vorrichtung sowie ein Verfahren zur Hängeförderung von Schlachtgeflügel entlang eines Förderweges in einer Geflügelbearbeitungsanlage.

Derartige Anordnungen, Vorrichtungen und Verfahren kommen in Anlagen zur Schlachtgeflügelförderung bzw. zur Schlachtgeflügelbearbeitung zum Einsatz. In der Regel umfassen derartige Anlagen eine Vielzahl unterschiedlicher Förder- und Bearbeitungslinien, an deren jeweiligen Schnittstellen eine Übergabe der Geflügelschlachtkörper von der einen Linie an eine andere Linie erforderlich ist.

Aus dem Dokument EP 2 687 101 B1 ist eine Verarbeitungseinrichtung für Geflügel mit einer Transfereinheit zum Überführen von Geflügelschlachtkörpern von einer Förderlinie an eine andere Förderlinie bekannt. Jede Transfereinheit umfasst einen umlaufenden Träger mit mehreren Transfermitteln. Durch Wechsel zwischen einem blockierten und einem blockadefreien Zustand laufen die Träger entweder synchron mit dem umlaufenden Träger mit oder werden von dieser umlaufenden Bewegung entkoppelt.

Ein Nachteil der bekannten Vorrichtung besteht darin, dass die Fördergeschwindigkeit der Transfermittel nur zwischen zwei Geschwindigkeiten variiert werden kann, nämlich so, dass sie entweder null ist oder der Geschwindigkeit des umlaufendes Trägers entspricht. Die bekannte Transfereinheit verfügt damit nur über einen stark eingeschränkten Einsatzbereich. Insbesondere bei auftretenden Schwankungen der Fördergeschwindigkeit einer der Förderlinien kann die Fördergeschwindigkeit der Transfermittel nicht entsprechend angepasst werden. Dies kann u. a. zu Übergabefehlern bei der Übergabe der Geflügelschlachtkörper von einer Förderlinie an die andere führen.

Die aus dem Dokument EP 2 687 101 B1 bekannten Transfermittel sind jeweils für die Aufnahme eines Geflügelschlachtkörpers eingerichtet. Hierzu weisen die Transfermittel entsprechende Aufnahmen auf, in die beide Beine eines jeden Geflügelschlachtkörpers eingehängt sind. Die Übergabe der Geflügelschlachtkörper erfolgt gemäß der Lehre der EP 2 687 101 B1 durch gleichzeitiges Umhängen beider Beine von der einen, abgebenden Förderlinie an die andere, aufnehmende Förderlinie. Aufgrund dieses Übergabeprinzips sind entsprechend weite Radien des umlaufenden Trägers zwingend erforderlich, um eine verlässliche Übergabe zu bewerkstelligen. Hierdurch sind der Wahlfreiheit hinsichtlich der Geometrie der Förderlinien enge Grenzen gesetzt.

Es ist daher Aufgabe der vorliegenden Erfindung, eine Anordnung vorzuschlagen, die eine höchst zuverlässige Übergabe von Schlachtgeflügel zwischen Förderlinien gewährleistet, wobei die Förderlinien hinsichtlich ihrer Geometrie und Fördergeschwindigkeit eine größtmögliche Variabilität aufweisen. Des Weiteren besteht die Aufgabe darin, ein entsprechendes Verfahren vorzuschlagen.

Ferner ist es Aufgabe der vorliegenden Erfindung, eine Vorrichtung vorzuschlagen, mittels derer Geflügelschlachtkörper mit hoher Zuverlässigkeit möglichst variabel gefördert werden können. Auch ist es Aufgabe der vorliegenden Erfindung, ein hierzu ein entsprechendes Verfahren vorzuschlagen.

Die Aufgabe wird durch eine Anordnung mit den eingangs genannten Merkmalen gelöst, wobei die Anordnung mindestens eine Rundläufereinrichtung zur Hängeförderung von Schlachtgeflügel entlang einer gekrümmten Förderstrecke mit einer Mehrzahl von jeweils zum beidbeinigen Halten eines Geflügelkörpers eingerichteten Hängeaufnahmen, eine Linearmotor-Fördereinrichtung mit einer einen Linearantrieb umfassenden, eine umlaufende Förderstrecke bildenden Führungsschiene mit einer Mehrzahl entlang der Führungsschiene mittels des Linearantriebs jeweils separat steuerbewegbar angeordneten Läufern sowie zur Aufnahme jeweils eines Geflügelbeines eingerichtete Halteelemente umfasst, wobei an jedem der Läufer jeweils eines der Halteelemente angeordnet ist, und wobei die Rundläufereinrichtung und die Linearmotor-Fördereinrichtung derart angeordnet sind, dass die gekrümmte Förderstrecke in einem Überführungsbereich mit einem Kurvenabschnitt der umlaufenden Förderstrecke zur Übergabe des Schlachtgeflügels zwischen den Förderlinien zumindest teilweise überlappt.

Die erfindungsgemäße Anordnung bietet gleich eine ganze Reihe von Vorteilen. Die Linearmotor-Fördereinrichtung bietet einen maximalen Grad an Variabilität hinsichtlich der Wahl der Fördergeschwindigkeiten und der Positioniermöglichkeiten. Die Fördergeschwindigkeiten bzw. Fördergeschwindigkeitsprofile sind für jeden der Läufer vorgebbar. Auf diese Weise kann die Fördergeschwindigkeit jedes Läufers individuell an die jeweiligen Gegebenheiten angepasst werden. Insbesondere ist es möglich, die Geflügelschlachtkörper anzuhalten, um Be- und/oder Verarbeitungsschritte an diesen durchzuführen.

Aufgrund der Einzelbeinförderung mittels jeweils eines separat steuerbewegbar eingerichteten Läufers findet eine Einzelbeinübergabe beim Übergeben der Geflügelschlachtkörper zwischen den Förderlinien statt. Auf diese Weise können in dem Überführungsbereich Kurvenabschnitte mit, gegenüber den aus dem Stand der Technik bekannten, deutlich reduzierten Kurvenradien realisiert werden. Ein weiterer Vorteil besteht darin, dass durch die flexible Geschwindigkeitswahl der Läufer die jeweiligen Geschwindigkeiten der Läufer an auftretende Fördergeschwindigkeitsschwankungen der Rundläufereinrichtung optimal anpassbar sind und so stets eine exakte und hoch zuverlässige Übergabe gewährleistet wird.

Eine zweckmäßige Ausgestaltung der Erfindung ist dadurch gekennzeichnet, dass die Linearmotor-Fördereinrichtung eine Steuereinrichtung umfasst, die zum steuervariablen Fördern jeweils eines Geflügelkörpers durch paarweises Bewegen eines Läuferpaares ausgebildet ist, wobei das Läuferpaar jeweils zwei benachbarte der Läufer umfasst. Mit anderen Worten bilden jeweils zwei der separat steuerbar eingerichteten und auf der Förderschiene benachbarten Läufer ein Läuferpaar, das eingerichtet ist, jeweils einen der Geflügelschlachtkörper zu fördern. Die jeweils benachbarten Läufer sind also steuerseitig miteinander gekoppelt. Beide der genannten Läufer bewegen sich also voneinander abhängig.

Weiter bevorzugt ist vorgesehen, den Abstand zwischen jeweils zwei benachbarten Läufern steuervariabel einzustellen. Durch die Variation des Abstandes der Läufer eines solchen Läuferpaares ist es möglich, die Vertikalausrichtung des Geflügelschlachtkörpers in gewissem Umfang zu verändern. Wird der Abstand vergrößert, so führt dies zu einem Heben des Geflügelkörpers, wird dieser verringert, zu einem Absinken. Auf diese Weise ist es möglich, den Geflügelschlachtkörper, beispielsweise für einen folgenden Bearbeitungsvorgang, optimal zu positionieren und auszurichten. Zudem besteht die Möglichkeit, den Geflügelschlachtkörper für bestimmte Bearbeitungsschritte mehr oder weniger stark vorzuspannen, um verbesserte Bearbeitungsergebnisse zu erzielen.

Gemäß einer vorteilhaften Weiterbildung ist vorgesehen, dass die Läufer jeweils Positionsverfolgungsmittel zur Ermittlung der jeweiligen Läuferposition umfassen. Dies bietet den Vorteil, dass die aktuellen Positionen eines jeden der Läufer erfasst werden und so einerseits mittels der Linearmotor-Fördereinrichtung eine exakte Positionierung jedes einzelnen der Läufer zu jeder Zeit gewährleistet ist und andererseits über die jeweiligen Läuferpositionen die aktuellen Positionen und Geschwindigkeiten jedes einzelnen der Geflügelschlachtkörper erfasst werden.

Eine vorteilhafte Ausbildung der Erfindung ist dadurch gekennzeichnet, dass die Steuereinrichtung eingerichtet ist, den Linearantrieb derart anzusteuern, dass jeweils der Abstand zwischen den Halteelementen der Läufer eines der Läuferpaare zumindest im Wesentlichen einem vorgegebenen Läuferpaarabstand entspricht.

Unter dem Läuferpaarabstand wird also der Abstand zwischen den Halteelementen der beiden benachbarten Läufer verstanden, entspricht also zugleich dem Abstand der in die jeweiligen Halteelemente eingehängten Geflügelbeinen.

Vorteilhafterweise ist beispielsweise einer der ein Läuferpaar bildenden Läufer als "Master" ausgebildet, dessen aktuelle Geschwindigkeit und Position seitens der Steuereinrichtung bedarfsgemäß vorgegeben wird. Der jeweils andere Läufer dieses Läuferpaares ist als "Slave" eingerichtet und folgt dem erstgenannten Läufer durch die Steuereinrichtung veranlasst derart, dass der Abstand zwischen den jeweiligen Halteelementen der Läufer konstant oder im Wesentlichen konstant ist.

Vorteilhafterweise ist die Steuereinrichtung daher eingerichtet, die Position und/oder die Geschwindigkeit mindestens eines der Läufer jeweils eines der Läuferpaare auf Basis einer Positionssollvorgabe und/oder einer Geschwindigkeitssollvorgabe zu steuern. Weiter bevorzugt ist die Steuereinrichtung eingerichtet, die Position und/oder die Geschwindigkeit des jeweils anderen Läufers jeweils eines der Läuferpaare unter Einhaltung des jeweiligen Läuferpaarabstandes nachzuführen.

Gemäß einer weiteren bevorzugten Ausbildung der Erfindung umfasst die Rundläufereinrichtung ein Antriebsaggregat und ist zumindest im Wesentlichen mit konstanter Umlaufgeschwindigkeit angetrieben. Vorteilhafterweise umfasst die Rundläufereinrichtung Sensormittel, die zum Erfassen der Winkelposition des Rundläufers, zum Erfassen der Ist-Umlaufgeschwindigkeit und zur Bestimmung der jeweiligen aktuellen Positionen mindestens einer der Hängeaufnahmen eingerichtet sind. Die Rundläufereinrichtung ist ferner ausgebildet, die so erfassten Größen an die Steuereinrichtung zu übermitteln. Auf diese Weise können beispielsweise lastabhängige Schwankungen der Umlaufgeschwindigkeit der Rundläufereinrichtung erfasst und jederzeit deren aktuelle Winkelposition ermittelt werden, die als Ausgangsbasis zur Synchronisation der Übergabe der Geflügelschlachtkörper von der Rundläufereinrichtung an die Linearmotor-Fördereinrichtung dient.

Gemäß einer weiteren bevorzugten Ausführungsform ist die Steuereinrichtung ausgebildet, die Position und/oder die Geschwindigkeit der Läufer eines Läuferpaares basierend auf der erfassten Ist-Umlaufgeschwindigkeit und der ermittelten aktuellen Position der mindestens einen Hängeaufnahme derart zu steuern, dass jeweils einer der Läufer zur Einzelbeinübergabe mit der jeweiligen Hängeaufnahme der Rundläufereinrichtung zeitgleich in dem Überführungsbereich aufeinandertreffen. Anders ausgedrückt ist die Steuereinrichtung ausgebildet, ein koordiniertes Aufeinandertreffen eines der Läufer mit dem von der Rundläufereinrichtung zu übergebenden Bein zu synchronisieren. Die Steuereinrichtung ist beispielsweise eingerichtet, aus den genannten Ausgangsgrößen vorauszuberechnen, welche Geschwindigkeit bzw. welches Geschwindigkeitsprofil des Läufers erforderlich ist, um in dem Überführungsbereich exakt mit dem zu übergebenden Bein des Geflügelschlachtkörpers zusammenzutreffen.

Gemäß einer weiteren bevorzugten Ausbildung der Erfindung ist die Rundläufereinrichtung zum Überführen der Geflügelkörper an die Linearmotor-Fördereinrichtung eingerichtet und die Anordnung umfasst weiter eine zweite Rundläufereinrichtung, die zum Überführen der Geflügelkörper von der Linearmotor-Fördereinrichtung an die zweite Rundläufereinrichtung ausgebildet ist. Dies bietet den Vorteil, dass die Geflügelschlachtkörper von der Rundläufereinrichtung an die Linearmotor-Fördereinrichtung steuervariabel überführt werden. Die mittels der Linearmotor-Fördereinrichtung geförderten Geflügelschlachtkörper sind vom Takt der Rundläufereinrichtung nun entkoppelt und können, beispielsweise zu stationär auszuführenden Bearbeitungszwecken, angehalten werden. Anschließend werden diese mittels der Linearmotor-Fördereinrichtung weitergefördert und an die zweite Rundläufereinrichtung übergeben. Beide der Rundläufereinrichtungen sind vorzugsweise derart ausgebildet, dass diese mit einer Hauptförderlinie synchronisiert arbeiten. Während die Rundläufereinrichtung eingerichtet ist, die Geflügelschlachtkörper zunächst von der Hauptförderline abzunehmen und an die Linearmotor-Fördereinrichtung zu übergeben, ist die zweite Rundläufereinrichtung ausgebildet, die Geflügelschlachtkörper im Anschluss von der Linearmotor-Fördereinrichtung zu übernehmen und diese schließlich an die Hauptförderlinie zurückzuführen.

Des Weiteren wird die Aufgabe durch eine Vorrichtung mit den eingangs genannten Merkmalen dadurch gelöst, dass die Vorrichtung mindestens eine Linearmotor-Fördereinrichtung mit einer einen Linearantrieb umfassenden umlaufenden Führungsschiene sowie einer Mehrzahl an entlang der Führungsschiene mittels des Linearantriebs jeweils separat steuerbewegbar ausgebildeten Läufern umfasst. Die Vorrichtung umfasst weiter zur Aufnahme jeweils eines Geflügelbeines eingerichtete Halteelemente, wobei an jedem der Läufer jeweils eines der Halteelemente angeordnet ist, eine zur Steuerung des Linearantriebs ausgebildete Steuereinrichtung, die zum steuervariablen Fördern jeweils eines Geflügelkörpers durch paarweises Bewegen eines Läuferpaares einrichtet ist. Das Läuferpaar umfasst jeweils zwei benachbarte der Läufer. Jeweils zwei der separat steuerbar eingerichteten und auf der Förderschiene benachbarten Läufer bilden vorteilhafterweise ein Läuferpaar, das eingerichtet ist, jeweils einen der Geflügelschlachtkörper zu fördern. Die jeweils benachbarten Läufer sind also steuerseitig miteinander gekoppelt. Beide der genannten Läufer bewegen sich also voneinander abhängig. Durch diese Kopplung jeweils zweier der Läufer wird eine zuverlässige Förderung der Geflügelschlachtkörper gewährleistet. Beide Beine des Geflügelschlachtkörpers werden sicher durch jeweils einen Läufer mit einem der Halteelemente gehalten. Durch die zwangsgekoppelte Bewegung der beiden Läufer wird eine Art starrer Doppelhängeaufnahme für den zu fördernden Geflügelschlachtkörper gebildet. Der Abstand der Halteelemente einer solchen Doppelhängeaufnahme ist jedoch steuervariabel eingerichtet, so dass der Abstand zu verschiedenen Zwecken in gewissem Maß variierbar ist.

Eine bevorzugte Weiterbildung der Erfindung zeichnet sich dadurch aus, dass die Läufer jeweils Positionsverfolgungsmittel zur Ermittlung der jeweiligen Läuferposition umfassen. Durch Variieren des Abstandes der Läufer eines solchen Läuferpaares wird das Fördern auch durch enge Radien oder komplexere Führungsschienengeometrien möglich. Zudem ist eine Vertikalausrichtung des Geflügelschlachtkörpers in gewissem Umfang möglich. Wird der Abstand vergrößert, so führt dies zu einem Heben des Geflügelkörpers, wird der Abstand verringert, zu einem Absinken. Auf diese Weise ist es möglich den Geflügelschlachtkörper, beispielsweise für einen folgenden Bearbeitungsvorgang, optimal zu positionieren und auszurichten. Zudem besteht die Möglichkeit, den Geflügelschlachtkörper für bestimmte Bearbeitungsschritte mehr oder weniger stark vorzuspannen, um verbesserte Bearbeitungsergebnisse zu erzielen. Weiter bevorzugt ist die Steuereinrichtung eingerichtet, den Linearantrieb derart anzusteuern, dass jeweils der Abstand zwischen den Läufern eines der Läuferpaare zumindest im Wesentlichen einem vorgegebenen Läuferpaarabstand entspricht.

Eine weitere zweckmäßige Ausbildung der Erfindung ist dadurch gekennzeichnet, dass die Steuereinrichtung eingerichtet ist, die Position und/oder die Geschwindigkeit mindestens eines der Läufer jeweils eines der Läuferpaare auf Basis einer Positionssollvorgabe und/oder einer Geschwindigkeitssollvorgabe zu steuern. Dies bietet den Vorteil, dass die aktuellen Positionen jedes Läufers mit dem Halteelement erfasst wird und so einerseits mittels der Linearmotor-Fördereinrichtung eine exakte Positionierung jedes einzelnen Läufers zu jeder Zeit gewährleistet ist und andererseits über die jeweiligen Läuferpositionen die aktuellen Positionen und Geschwindigkeiten jedes einzelnen der Geflügelschlachtkörper erfasst werden.

Gemäß einer weiteren bevorzugten Ausführungsform ist die Steuereinrichtung weiter eingerichtet, die Position und/oder die Geschwindigkeit des jeweils anderen Läufers jeweils eines der Läuferpaare unter Einhaltung des jeweiligen Läuferpaarabstandes nachzuführen. Vorteilhafterweise ist so die Position und/oder Geschwindigkeit eines der Läufer mittels der Steuereinrichtung vorgebbar, während sich der jeweils andere der Läufer eines der Läuferpaare an dem Bewegungsmuster des ersten Läufers steuerbeweglich orientiert. Mit anderen Worten ist die Steuereinrichtung ausgebildet, einen der Läufer eines der Läuferpaare als "Master" anzusteuern, dessen aktuelle Geschwindigkeit und Position seitens der Steuereinrichtung bedarfsgemäß vorgegeben wird. Der jeweils andere Läufer dieses Läuferpaares ist als "Slave" eingerichtet und folgt dem ersten Läufer, durch die Steuereinrichtung veranlasst, in konstantem oder im Wesentlichen konstantem Abstand. Auf diese Weise wird der Abstand zwischen den Halteelementen der Läufer konstant oder im Wesentlichen konstant gehalten.

Des Weiteren wird die Aufgabe durch ein entsprechendes Verfahren mit den eingangs genannten Merkmalen dadurch gelöst, dass das Verfahren die Schritte Fördern von Schlachtgeflügel mittels mindestens einer zur Hängeförderung des Schlachtgeflügels ausgebildeten Rundläufereinrichtung entlang einer gekrümmten Förderstrecke, wobei die Geflügelkörper von einer Mehrzahl von Hängeaufnahmen der Rundläufereinrichtung jeweils beidbeinig gehalten werden; Fördern des Schlachtgeflügels mittels einer einen Linearantrieb umfassenden Linearmotor-Fördereinrichtung entlang einer durch eine Führungsschiene gebildeten umlaufenden Förderstrecke durch gesteuertes Bewegen einer Mehrzahl entlang der Führungsschiene mittels des Linearantriebs jeweils separat steuerbewegbar angeordneten Läufern, wobei jeweils ein Geflügelbein mittels jeweils an jedem der Läufer angeordneten Halteelementen gehalten wird; Übergeben des Schlachtgeflügels zwischen den Förderlinien durch zumindest teilweises Überlappen der gekrümmten Förderstrecke der Rundläuferfördereinrichtung mit einem Kurvenabschnitt der umlaufenden Förderstrecke in einem Überführungsbereich, umfasst. Die Kombination aus Förderung mittels der Linearmotor-Fördereinrichtung und der separaten steuerbeweglichen Einzelbeinförderung bietet ein hohes Maß an Flexibilität und Variabilität bei der Förderung. Die Einzelbeinförderung ermöglicht das Abfahren beliebiger Förderstreckengeometrien, insbesondere das Durchlaufen enger Radien. Zudem sind verschiedene Fördergeschwindigkeiten und/oder Fördergeschwindigkeitsprofile, einschließlich des Anhaltens der Geflügelschlachtkörper zu Bearbeitungszwecken, möglich. Ein weiterer Vorteil besteht darin, die Geflügelkörper in einem gewissen Maß anheben oder absenken zu können, in dem der Abstand zwischen den jeweils einen Geflügelschlachtkörper haltenden Läufern steuerbar variabel ist.

Eine bevorzugte Weiterbildung der Erfindung zeichnet sich durch steuervariables Fördern jeweils eines Geflügelkörpers durch paarweises Bewegen eines Läuferpaares aus, wobei das Läuferpaar jeweils zwei benachbarte der Läufer umfasst.

Gemäß einer weiteren bevorzugten Ausbildung der Erfindung werden die jeweiligen Läuferpositionen mittels Positionsverfolgungsmitteln ermittelt.

Eine weitere zweckmäßige Ausbildung der Erfindung ist gekennzeichnet durch Steuern des Linearantriebs mittels einer Steuereinrichtung derart, dass jeweils der Abstand zwischen den Läufern eines der Läuferpaare zumindest im Wesentlichen einem vorgegebenen Läuferpaarabstand entspricht.

Gemäß einer weiteren bevorzugten Ausführungsform wird die Position und/oder die Geschwindigkeit mindestens eines der Läufer jeweils eines der Läuferpaare auf Basis einer Positionssollvorgabe und/oder einer Geschwindigkeitssollvorgabe gesteuert.

Eine weitere zweckmäßige Ausgestaltung der Erfindung ist dadurch gekennzeichnet, dass die Position und/oder die Geschwindigkeit des jeweils anderen Läufers jeweils eines der Läuferpaare unter Einhaltung des jeweiligen Läuferpaarabstandes mittels der Steuereinrichtung nachgeführt wird.

Eine bevorzugte Weiterbildung der Erfindung zeichnet sich durch Antreiben der Rundläufereinrichtung mit zumindest im Wesentlichen konstanter Umlaufgeschwindigkeit mittels eines Antriebsaggregats aus.

Gemäß einer weiteren bevorzugten Ausbildung der Erfindung wird die Winkelposition des Rundläufers sowie die Ist-Umlaufgeschwindigkeit erfasst und die jeweiligen aktuellen Positionen mindestens einer der Hängeaufnahmen mittels Sensormitteln bestimmt.

Eine weitere zweckmäßige Ausgestaltung der Erfindung ist gekennzeichnet durch Steuern der Position und/oder der Geschwindigkeit der Läufer eines Läuferpaares mittels der Steuereinrichtung basierend auf der erfassten Ist-Umlaufgeschwindigkeit und der ermittelten aktuellen Position der mindestens einen Hängeaufnahme derart, dass jeweils eines der Halteelemente der Läufer zur Einzelbeinübergabe und der jeweiligen Hängeaufnahme der Rundläufereinrichtung zeitgleich in dem Überführungsbereich aufeinandertreffen.

Gemäß einer weiteren bevorzugten Ausbildung der Erfindung werden die Geflügelkörper von der Rundläufereinrichtung an die Linearmotor-Fördereinrichtung und von der Linearmotor-Fördereinrichtung an die zweite Rundläufereinrichtung mittels einer zweiten Rundläufereinrichtung überführt.

Die mit dem vorstehend genannten erfindungsgemäßen Verfahren verbunden Vorteile und Vorzüge sind bereits zuvor im Zusammenhang mit der erfindungsgemäßen Anordnung in aller Ausführlichkeit beschrieben, so dass an dieser Stelle zur Vermeidung von Wiederholungen auf die dort genannten Vorzüge verwiesen wird. Diese gelten in analoger Weise auch für das erfindungsgemäße Verfahren.

Des Weiteren wird die Aufgabe durch ein entsprechendes Verfahren mit den eingangs genannten Merkmalen dadurch gelöst, dass das Verfahren die Schritte Fördern des Schlachtgeflügels mittels einer einen Linearantrieb umfassenden Linearmotor-Fördereinrichtung entlang einer durch eine Führungsschiene gebildeten umlaufenden Förderstrecke durch gesteuertes Bewegen einer Mehrzahl entlang der Führungsschiene mittels des Linearantriebs jeweils separat steuerbewegbar angeordneten Läufern, wobei jeweils ein Geflügelbein mittels jeweils an jedem der Läufer angeordneten Halteelementen gehalten wird; Steuern des Linearantriebs mittels einer Steuereinrichtung derart, dass jeweils einer der Geflügelkörper durch paarweises Bewegen eines Läuferpaares steuervariabel gefördert wird, wobei das Läuferpaar jeweils zwei benachbarte der Läufer umfasst, umfasst. Mittels jeweils zwei der separat steuerbaren und auf der Förderschiene benachbarten Läufer wird so vorteilhafterweise ein Läuferpaar gebildet mittels dessen jeweils einer der Geflügelschlachtkörper gefördert wird. Es erfolgt also eine steuerseitige Kopplung jeweils benachbarter Läufer, so dass die Bewegung der Läufer voneinander abhängig bzw. gebunden ist. Durch diese Kopplung jeweils zweier der Läufer wird eine zuverlässige Förderung der Geflügelschlachtkörper gewährleistet. Beide Beine des Geflügelschlachtkörpers werden sicher durch jeweils einen Läufer mit einem der Halteelemente gehalten. Durch die zwangsgekoppelte Bewegung der beiden Läufer wird eine Art starrer Doppelhängeaufnahme für den zu fördernden Geflügelschlachtkörper gebildet. Der Abstand der Halteelemente einer solchen Doppelhängeaufnahme ist jedoch steuervariabel eingerichtet, so dass der Abstand zu verschiedenen Zwecken in gewissem Maß variierbar ist.

Eine bevorzugte Weiterbildung der Erfindung zeichnet sich durch Ermitteln der jeweiligen Läuferposition mittels Positionsverfolgungsmitteln aus.

Gemäß einer weiteren bevorzugten Ausbildung der Erfindung wird der Linearantrieb mittels der Steuereinrichtung derart gesteuert, dass jeweils der Abstand zwischen den Halteelementen der Läufern eines der Läuferpaare zumindest im Wesentlichen einem vorgegebenen Läuferpaarabstand entspricht.

Eine weitere zweckmäßige Ausbildung der Erfindung ist gekennzeichnet durch Steuern der Position und/oder der Geschwindigkeit mindestens eines der Läufer jeweils eines der Läuferpaare auf Basis einer Positionssollvorgabe und/oder einer Geschwindigkeitssollvorgabe.

Gemäß einer weiteren bevorzugten Ausführungsform wird die Position und/oder die Geschwindigkeit des jeweils anderen Läufers jeweils eines der Läuferpaare unter Einhaltung des jeweiligen Läuferpaarabstandes mittels der Steuereinrichtung nachgeführt.

Die mit dem vorstehend genannten erfindungsgemäßen Verfahren verbunden Vorteile und Vorzüge sind bereits zuvor im Zusammenhang mit der erfindungsgemäßen Vorrichtung in aller Ausführlichkeit beschrieben, so dass an dieser Stelle zur Vermeidung von Wiederholungen auf die dort genannten Vorzüge verwiesen wird. Diese gelten in analoger Weise auch für das erfindungsgemäße Verfahren.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert.

In der Zeichnung zeigt:
- Fig. 1: eine perspektivische Übersichtsansicht der erfindungsgemäßen Anordnung
- Fig. 2: eine perspektivische Detailansicht der erfindungsgemäßen Anordnung,
- Fig. 3 - 8: jeweils perspektivische Ansichten in unterschiedlichen Stadien der Übergabe eines Geflügelkörpers,
- Fig. 9 und 10: Draufsichten einer Auswahl der in den Figuren 3 bis 8 gezeigten Übergabestadien
und

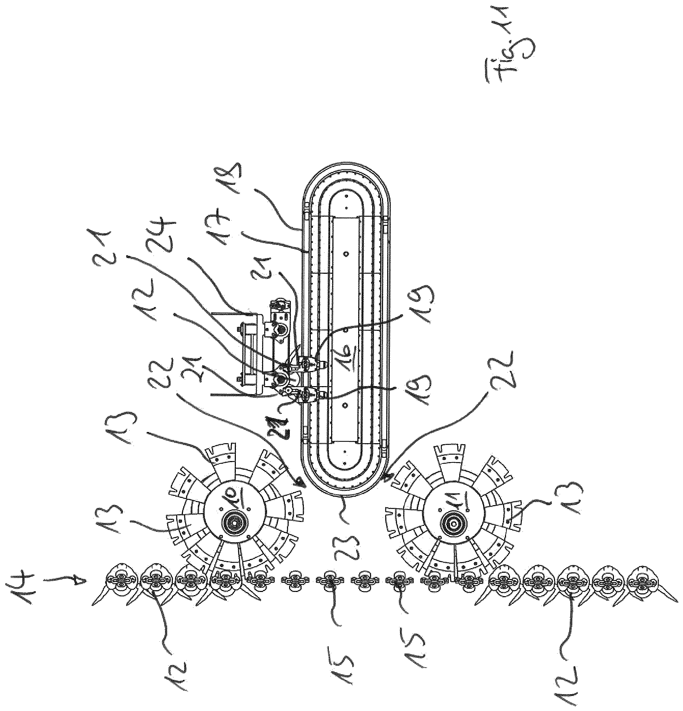

- Fig. 11: eine Draufsicht der in Figur 1 gezeigten Ansicht.

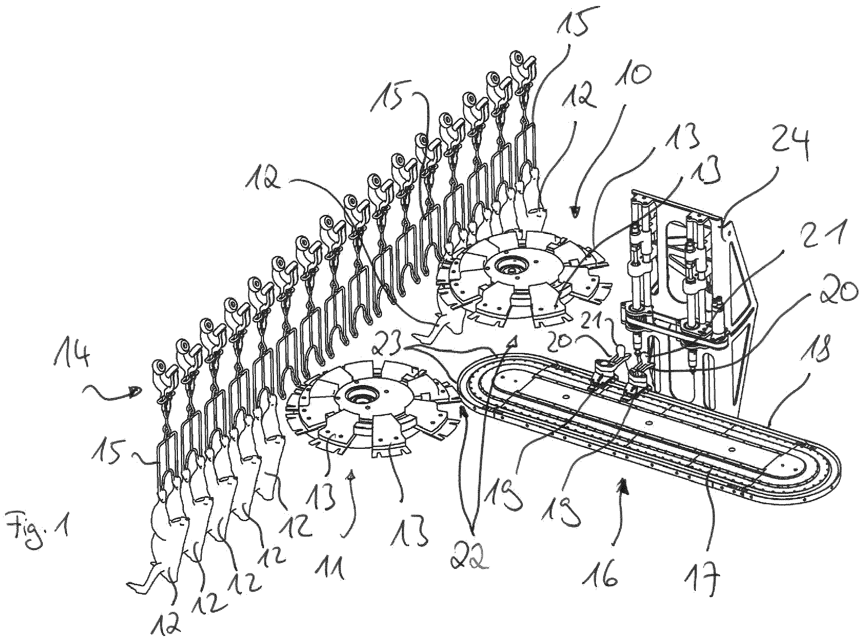

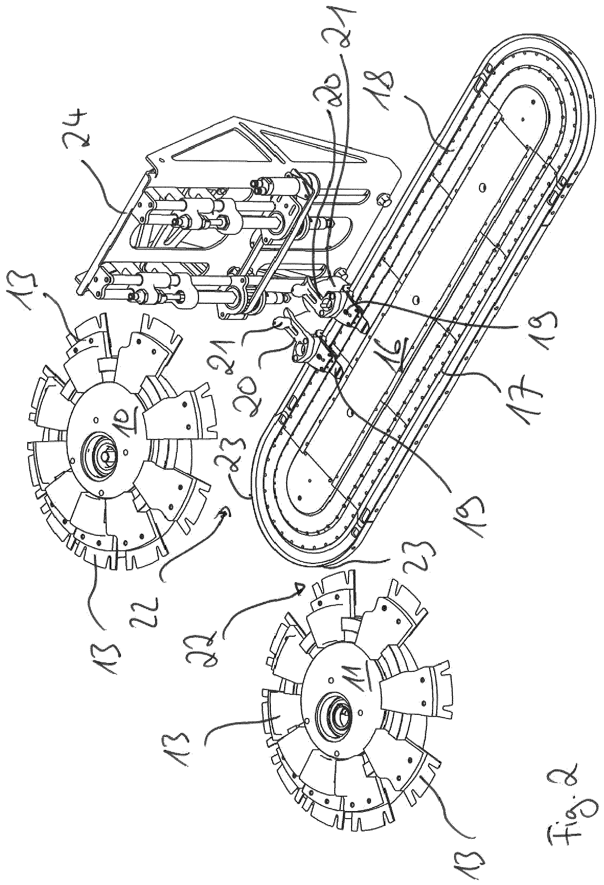

Figur 1 zeigt eine perspektivische Übersichtsansicht der erfindungsgemäßen Anordnung. Teil dieser Anordnung ist die erfindungsgemäße Vorrichtung, die ebenfalls in Figur 1 dargestellt ist. Figur 2 zeigt eine perspektivische Detailansicht der erfindungsgemäßen Anordnung sowie der erfindungsgemäßen Vorrichtung. Zur Vermeidung von Wiederholungen werden im Folgenden die erfindungsgemäße Anordnung sowie die erfindungsgemäße Vorrichtung jeweils im Kontext mit dem zugehörigen erfindungsgemäßen Verfahren im Detail erläutert.

Die Figuren 1 und 2 zeigen beispielhaft die erfindungsgemäße Anordnung zur Übergabe von Schlachtgeflügel. Die Anordnung umfasst mindestens eine Rundläufereinrichtung 10, 11, die zur Hängeförderung von Schlachtgeflügel entlang einer gekrümmten Förderstrecke eingerichtet ist. Die gekrümmte Förderstrecke ist durch den Aufbau der Rundläufereinrichtung definiert. Die gekrümmte Förderstrecke kann beispielsweise kreisförmig ausgebildet sein. In diesem Fall ist die mindestens eine Rundläufereinrichtung 10, 11 radförmig ausgebildet und rotiert um eine Drehachse, die durch den Radmittelpunkt verläuft. Alternativ ist es möglich, dass die Drehachse bezüglich der Radmitte exzentrisch angeordnet ist. Vorzugsweise ist die mindestens eine Rundläufereinrichtung 10, 11 - wie in der Zeichnung gezeigt - radförmig mit exzentrisch angeordneter Drehachse ausgebildet und umfasst eine Verstellmechanik, mittels derer sich der Abstand zwischen den Hängeaufnahmen 13 beim Umlauf hin zur Linearmotor-Fördereinrichtung 16 vergrößert, während sich der Abstand zwischen den Hängeaufnahmen 13 beim Umlauf hin zur Hauptförderlinie 14 entsprechend verringert. Der erweiterte Abstand zwischen den Hängeaufnahmen 13 in dem Überführungsbereich 22 wirkt sich vorteilhaft auf das zum Überführen der Geflügelkörper 12 zur Verfügung stehende Zeitfenster aus, so dass stets eine einwandfreie Übergabe gewährleistet wird.

Die mindestens eine Rundläufereinrichtung 10, 11 weist eine Mehrzahl von jeweils zum beidbeinigen Halten eines Geflügelkörpers 12 eingerichteten Hängeaufnahmen 13 auf.

Vorzugsweise - aber nicht notwendigerweise - umfasst die Anordnung eine Hauptförderlinie 14, mittels der die Geflügelkörper 12 in Doppelschäkel 15 eingehängt gefördert werden. Die Hauptförderlinie 14 sowie die mindestens eine Rundläufereinrichtung 10, 11 arbeiten weiter bevorzugt synchronisiert, d. h. die Fördergeschwindigkeiten sind derart aufeinander abgestimmt, dass eine Übergabe der Geflügelkörper 12 von der Hauptförderlinie auf die mindestens eine Rundläufereinrichtung 10, 11 und umgekehrt ermöglicht wird.

Wie in der Zeichnung gezeigt sind vorzugsweise zwei der Rundläufereinrichtungen, nämlich die Rundläufereinrichtung 10 sowie die zweite Rundläufereinrichtung 11 vorgesehen. Aus Gründen der besseren Darstellbarkeit wird im Folgenden zunächst nur eine der Rundläufereinrichtungen 10, 11 beschrieben. Sämtliche Ausführungen hierzu gelten jedoch für jede der Rundläufereinrichtungen 10, 11 in gleicher Weise.

Die erfindungsgemäße Anordnung umfasst weiter eine Linearmotor-Fördereinrichtung 16, die einen Linearantrieb aufweist. Die Linearmotor-Fördereinrichtung 16 bildet eine umlaufende Förderstrecke 17 mit einer Mehrzahl entlang einer Führungsschiene 18 mittels des Linearantriebs jeweils separat steuerbewegbar angeordneten Läufern 19, von denen aus Übersichtlichkeitsgründen in der Zeichnung jeweils nur zwei dargestellt sind. Bei einer solchen Linearmotor-Fördereinrichtung 16 handelt es sich beispielsweise um das lineare Transportsystem XTS der Firma Beckhoff. In der Führungsschiene 18 einer solche Linearmotor-Fördereinrichtung 16 sind eine Vielzahl von einzeln ansteuerbaren Elektromagneten angeordnet, während die Läufer 19 mittels Kugel- oder Rollenlagerung entlang der Führungsschiene 18 verschieblich gelagert sind. Der Linearantrieb wird durch die steuerbaren Elektromagnete der Führungsschiene 18 sowie in den Läufern 19 integrierte Magnete realisiert, so dass jeder der Läufer 19 individuell und einzeln ansteuerbar und damit separat bewegbar eingerichtet ist.

An jedem der Läufer 19 ist jeweils ein Halteelement 20 angeordnet, das zur Aufnahme jeweils eines Geflügelbeins 21 ausgebildet und eingerichtet ist.

Die Rundläufereinrichtung 10 und die Linearmotor-Fördereinrichtung 16 sind derart angeordnet, dass die gekrümmte Förderstrecke in einem Überführungsbereich 22 mit einem Kurvenabschnitt 23 der umlaufenden Förderstrecke 17 zumindest teilweise überlappt. Hierdurch wird die Übergabe des Schlachtgeflügels bzw. der Geflügelkörper 12 zwischen den Förderlinien, also der mindestens einen Rundläufereinrichtung 10, 11 und der Linearmotor-Fördereinrichtung 16 ermöglicht. Wie der Zeichnung zu entnehmen ist, sind die jeweils offenen Seiten einerseits der Hängeaufnahmen 13 der mindestens einen Rundläufereinrichtung 10, 11 und die Halteelemente 20 zur Aufnahme jeweils eines der Geflügelbeine 21 in dem Überführungsbereich 22 jeweils einander zugewandt, so dass das jeweilige Geflügelbein 21 von der Hängeaufnahme 13 an das jeweilige Halteelement 20 und umgekehrt übergebbar ist. Unter teilweiser Überlappung von der gekrümmten Förderstrecke und dem Kurvenabschnitt 23 der umlaufenden Förderstrecke 17 wird verstanden, dass die jeweiligen Bahnabschnitte derart angeordnet sind, dass diese sich in mindestens einem Punkt überschneiden oder einen minimalen Abstand zueinander aufweisen, der eine zuverlässige Einzelbeinüberführung erlaubt.

Die Linearmotor-Fördereinrichtung 16 weist eine - in der Zeichnung nicht gezeigte - Steuereinrichtung auf, die zum steuervariablen Fördern jeweils eines der Geflügelkörper 12 durch paarweises Bewegen eines der Läuferpaare ausgebildet ist. Ein Läuferpaar umfasst jeweils zwei benachbarte Läufer 19, also jeweils zwei der Läufer 19 die auf der Führungsschiene 18 nebeneinander angeordnet sind. Die Steuereinrichtung ist also ausgebildet, die beiden Läufer 19 eines Läuferpaares quasi synchron zu bewegen. Die so gemeinsam bewegten Läufer 19 bilden auf diese Weise eine Art "virtuelle" Geflügelkörperaufnahme, deren Halteelemente 20 für die beiden Geflügelbeine 21 je eines der Geflügelkörper 12 einen konstanten oder zumindest im Wesentlichen konstanten Abstand aufweisen. Der Abstand der Läufer 19 eines Läuferpaares ist jedoch - wie weiter unten im Detail erläutert wird - optional mittels der Steuereinrichtung variierbar eingerichtet.

In den Figuren 1 und 2 ist nur schematisch eine Bearbeitungsstation 24 angedeutet. Die Bearbeitungsstation 24 ist zur stationären Bearbeitung der Geflügelkörper 12 ausgebildet und eingerichtet. Die Bearbeitungsstation 24 ist beispielsweise zum Entweiden oder zum Herstellen eines Zugangs zur Bauchhöhle des Geflügelkörpers 12 über die Kloakenöffnung ausgebildet. Grundsätzlich kann die Bearbeitungsstation 24 ausgebildet sein, jeden üblichen Bearbeitungsvorgang auszuführen, der bei der Verarbeitung von Schlachtgeflügel erforderlich ist. Hierzu können wahlweise entlang der umlaufenden Förderstrecke 17 mehrere der Bearbeitungsstationen 24 mit unterschiedlicher Funktion angeordnet sein.

Die Steuereinrichtung ist weiter eingerichtet, durch paarweises Bewegen der ein Läuferpaar bildenden Läufer 19 die Geflügelkörper 12 bedarfsgemäß in verschiedene Bearbeitungspositionen zu verbringen, so dass eine optimale Bearbeitung mittels der Bearbeitungsstation 24 ermöglicht wird.

Vorzugsweise umfassen die Läufer 19 jeweils - in der Zeichnung nicht gezeigte - Positionsverfolgungsmittel, die zur Ermittlung der jeweiligen Läuferposition eingerichtet sind. Auch ist es möglich, dass die Steuereinrichtung der Linearmotor-Fördereinrichtung 16 Mittel zur Positionsverfolgung jedes einzelnen der Läufer 19 umfasst. Auf diese Weise ist die jeweilige Position eines jeden Läufers 19 nachverfolgbar eingerichtet. Die Positionsverfolgung kann beispielsweise durch Anlernen der Läufer 19 an einer vordefinierten Nullposition erfolgen. Wird die Position des Läufers 19 anschließend durch die Steuereinrichtung verändert, wird die geänderte aktuelle Position in der Steuereinrichtung kontinuierlich gespeichert.

Die Läufer 19 sind alternativ mit einer Kennung versehen, die seitens der Steuereinrichtung ausgelesen und zur Positionsbestimmung herangezogen wird. Weiter bevorzugt sind die Positionsverfolgungsmittel integrierter Bestandteil der Steuereinrichtung der Linearmotor-Fördereinrichtung 16. Dies bietet den Vorteil, dass die jeweils gewünschten Positionen der Läufer 19 bzw. das gewünschte Bewegungsprofil mittels der Steuereinrichtung vorgebbar ist und die Steuereinrichtung die exakte Positionierung der Läufer 19 übernimmt.

Vorteilhafterweise ist die Steuereinrichtung weiter eingerichtet, den Linearantrieb derart anzusteuern, dass jeweils der Abstand zwischen den Läufern 19 eines der Läuferpaare zumindest im Wesentlichen einem vorgegebenen Läuferpaarabstand entspricht. Auf diese Weise wird der Abstand zwischen den genannten Läufern 19 im Wesentlichen konstant gehalten, um die Geflügelkörper 12 an den Geflügelbeinen 21 hängend zuverlässig steuervariabel zu fördern.

Die Steuereinrichtung ist zudem eingerichtet, die Position und/oder die Geschwindigkeit mindestens eines der Läufer 19 jeweils eines der Läuferpaare auf Basis einer Positionssollvorgabe und/oder einer Geschwindigkeitssollvorgabe zu steuern. Durch derartige Positionssollvorgaben und/oder Geschwindigkeitssollvorgaben ist einerseits ein kontrolliertes Überführen der Geflügelkörper 12 zwischen einer der Rundläufereinrichtung 10, 11 und der Linearmotor-Fördereinrichtung 16 und anderseits ein temporäres Anhalten zur stationären Bearbeitung der Geflügelkörper mittels der Bearbeitungsstation 24 möglich.

Bevorzugt ist die Steuereinrichtung weiter eingerichtet, die Position und/oder die Geschwindigkeit des jeweils anderen Läufers 19 jeweils eines der Läuferpaare unter Einhaltung des jeweiligen Läuferpaarabstandes nachzuführen. Anders ausgedrückt ist die Steuereinrichtung ausgebildet auf Basis der Positionssollvorgabe und/oder der Geschwindigkeitssollvorgabe die jeweilige Position eines der Läufer 19 vorzugeben. Der jeweils andere Läufer 19 des Läuferpaares wird mittels der Steuereinrichtung unter Einhaltung des vorgegebenen Läuferpaarabstandes nachgeführt, folgt also dem ersten der Läufer 19 in einem vordefinierten Abstand. Die Steuereinrichtung ist folglich eingerichtet, Position und/oder Geschwindigkeit des ersten Läufers des Läuferpaares als "Master" einzustellen, während der jeweils andere der Läufer 19 im "Slave-Betrieb" zu diesem in konstantem oder im Wesentlichen in konstantem Abstand hinter dem ersten der Läufer 19 nachgeführt wird.

Vorzugsweise umfasst die Rundläufereinrichtung 10 ein - in der Zeichnung nicht gezeigtes - Antriebsaggregat, mittels dessen diese mit zumindest im Wesentlichen konstanter Umlaufgeschwindigkeit angetrieben wird. Die Umlaufgeschwindigkeit der Rundläufereinrichtung ist bevorzugt auf die Fördergeschwindigkeit der Hauptförderlinie 14 abgestimmt. Weiter bevorzugt ist der Antrieb der Hauptförderlinie mit dem der Rundläufereinrichtungen 10, 11 mechanisch gekoppelt, so dass diese zwangssynchronisiert eingerichtet sind. Gemäß einer alternativen Ausführung sind die Rundläufereinrichtungen 10, 11 sowie die Hauptförderlinie jeweils mit eigenen Antriebsaggregaten mit jeweils aufeinander abgestimmten Antriebsgeschwindigkeiten ausgestattet.

Die Rundläufereinrichtung 10 und/oder die Rundläufereinrichtung 11 ist/sind zum Erfassen der Winkelposition des jeweiligen Rundläufers 10, 11 eingerichtet und umfassen hierzu eingerichtete Sensormittel. Die Sensormittel sind weiter zum Erfassen der Ist-Umlaufgeschwindigkeit und zur Bestimmung der jeweiligen aktuellen Positionen mindestens einer der Hängeaufnahmen 13 eingerichtet. Zudem ist die Steuereinrichtung ausgebildet, die Position und/oder die Geschwindigkeit der Läufer eines Läuferpaares basierend auf der erfassten Ist-Umlaufgeschwindigkeit und der ermittelten aktuellen Position der mindestens einen Hängeaufnahme derart zu steuern, dass jeweils einer der Läufer zur Einzelbeinübergabe mit der jeweiligen Hängeaufnahme der Rundläufereinrichtung zeitgleich in dem Überführungsbereich 22 aufeinandertreffen.

Mit anderen Worten ist die Steuereinrichtung ausgebildet, die Läufer 19 in dem Überführungsbereich 22 mit dem Umlauf der jeweiligen Rundläufereinrichtung 10, 11 zu synchronisieren, während in den übrigen Förderabschnitten der umlaufenden Förderstrecke 17 der Linearmotor-Fördereinrichtung 16 die Bewegung der Läufer 19 unabhängig von der Umlaufgeschwindigkeit der Rundläufereinrichtungen 10, 11 ist.

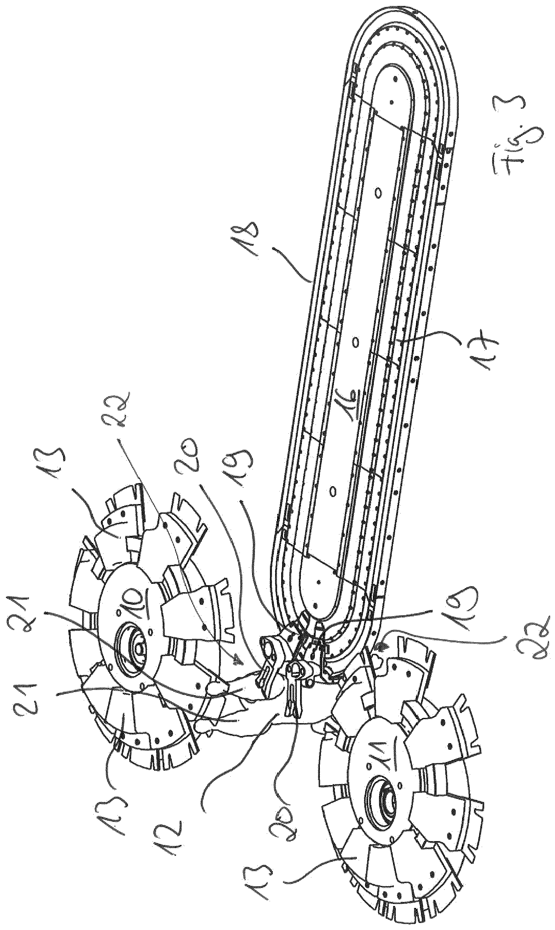

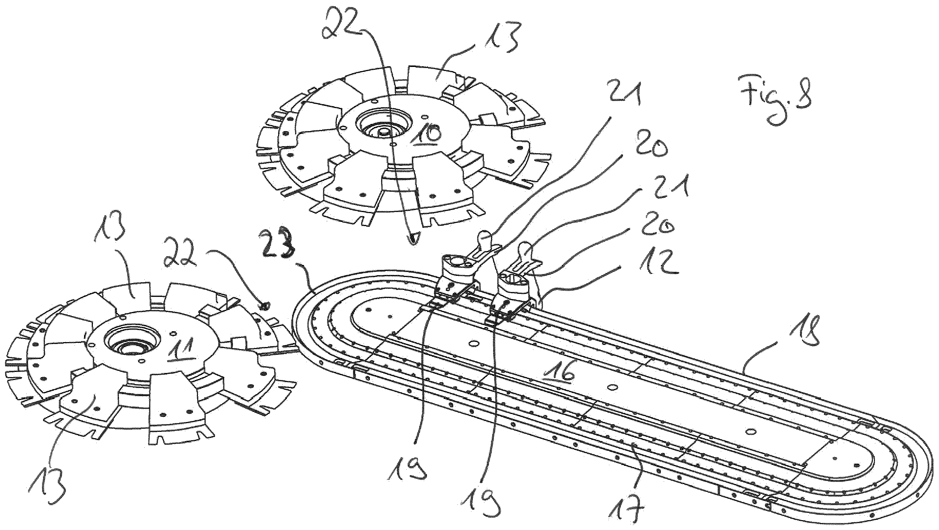

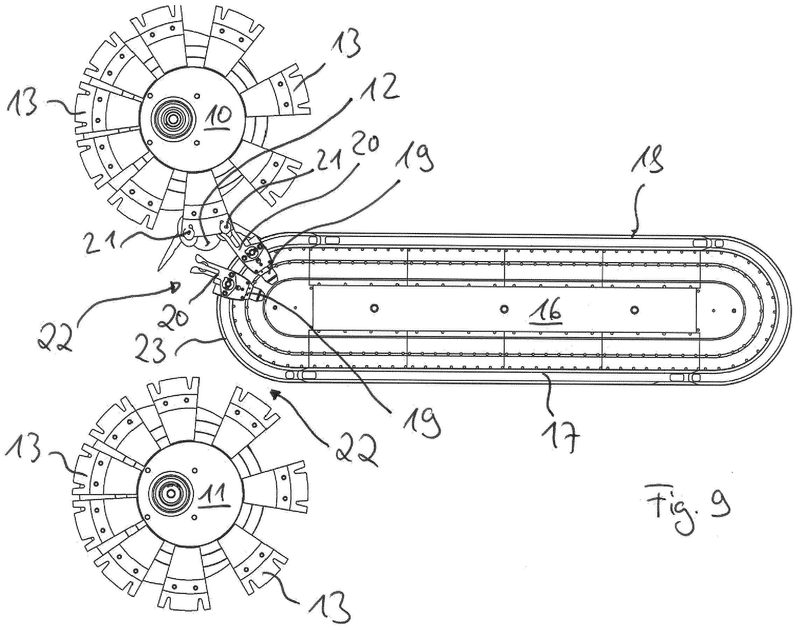

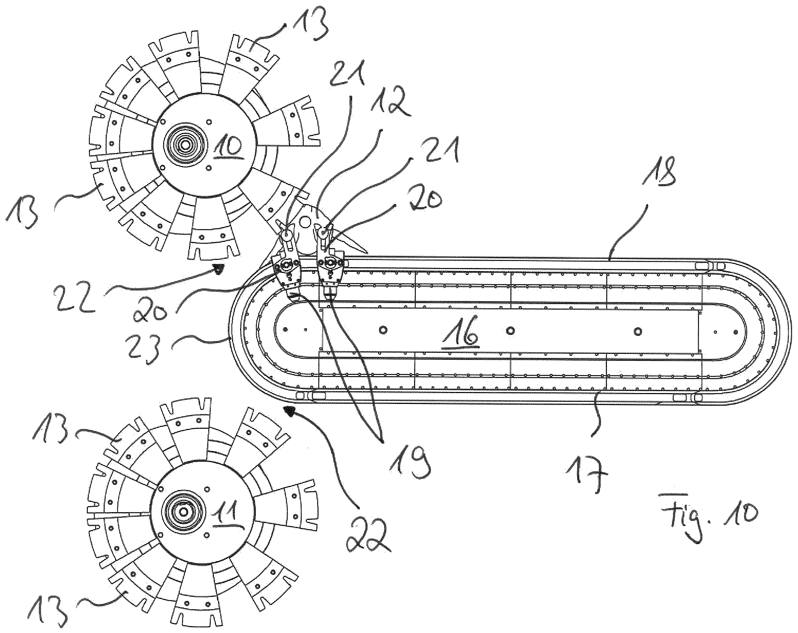

Dies soll anhand der Figuren 3 bis 8, die jeweils perspektivische Ansichten in unterschiedlichen Stadien der Übergabe eines Geflügelkörpers zeigen, sowie den entsprechenden in Figur 9 und 10 gezeigten Draufsichten im Folgenden näher erläutert werden. Der Vorgang wird beispielhaft bei der Überführung eines Geflügelkörpers 12 von der Rundläufereinrichtung 10 an die Linearmotor-Fördereinrichtung 16 beschrieben, gilt jedoch in analoger Weise auch für die Überführung eines Geflügelkörpers 12 von der Linearmotor-Fördereinrichtung 16 an die zweite Rundläufereinrichtung 11.

Figur 3 zeigt die Positionen der Läufer 19 eines Läuferpaares vor Beginn der Überführung des Geflügelkörpers 12 von der Rundläufereinrichtung 10 an die Linearmotor-Fördereinrichtung 16. Über das - nicht gezeigte - Sensormittel liegen der Steuereinrichtung Informationen darüber vor, in welcher aktuellen (Winkel-)Position sich die erste Rundläufereinrichtung 10 befindet. Die Steuereinrichtung steuert nun die sich im Uhrzeigersinn bewegende Läufer 19 der Linearmotor-Fördereinrichtung 16 derart an, dass diese spätestens beim Eintreten in den Überführungsbereich 22 eine Fördergeschwindigkeit aufweisen, die der Bahngeschwindigkeit des zu übergebenden Geflügelbeines 21 entsprechen. Die Steuereinrichtung ist weiter eingerichtet, den voraussichtlichen Zeitpunkt des Zusammentreffens des Läufers 19 mit dem ersten der Geflügelbeine 21 vorab zu ermitteln und das hierzu erforderliche Beschleunigungsprofil zu bestimmen, mit dem der vorauseilende der Läufer 19 des Läuferpaares zu beschleunigen ist.

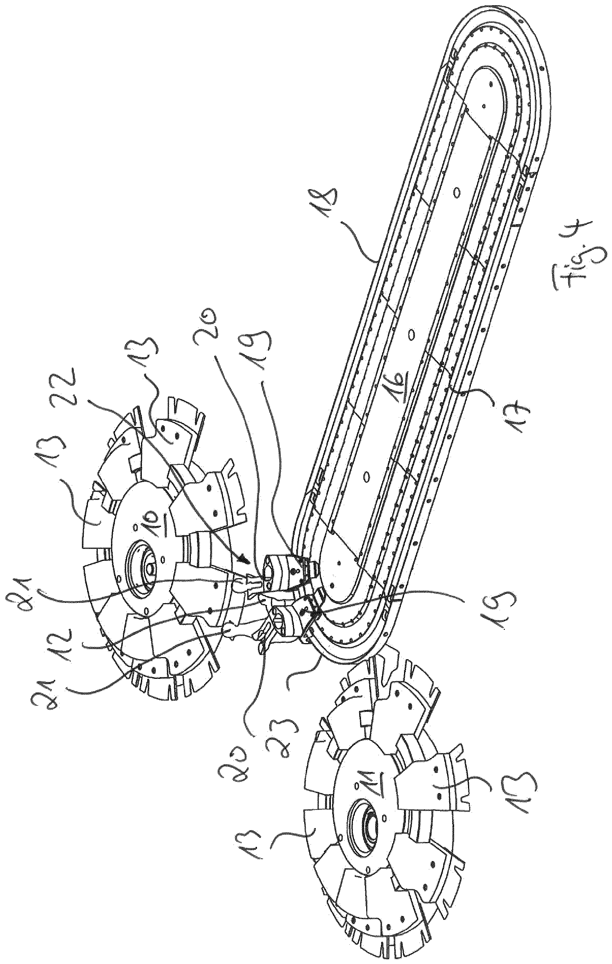

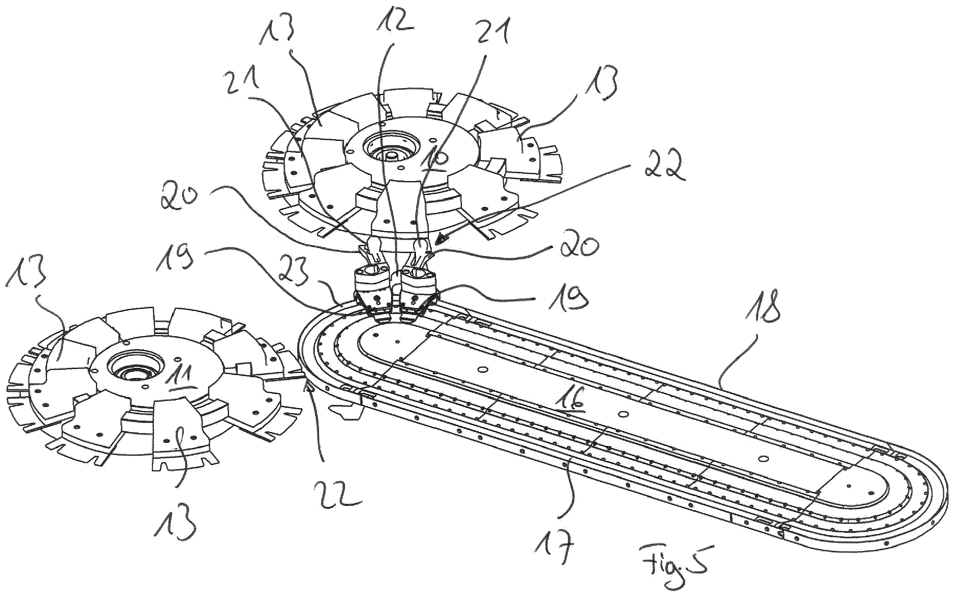

Hierdurch trifft der vorauseilende der Läufer 19 des Läuferpaares - wie in Figuren 4 und 5 gezeigt - exakt mit dem Halteelement 20 des ersten der Geflügelbeine 21 in dem Überführungsbereich 22 zusammen, so dass das erste der Geflügelbeine 21 aus der Hängeaufnahme 13 der Rundläufereinrichtung 11 in das Halteelement 20 des vorauseilenden Läufers 19 überführt wird.

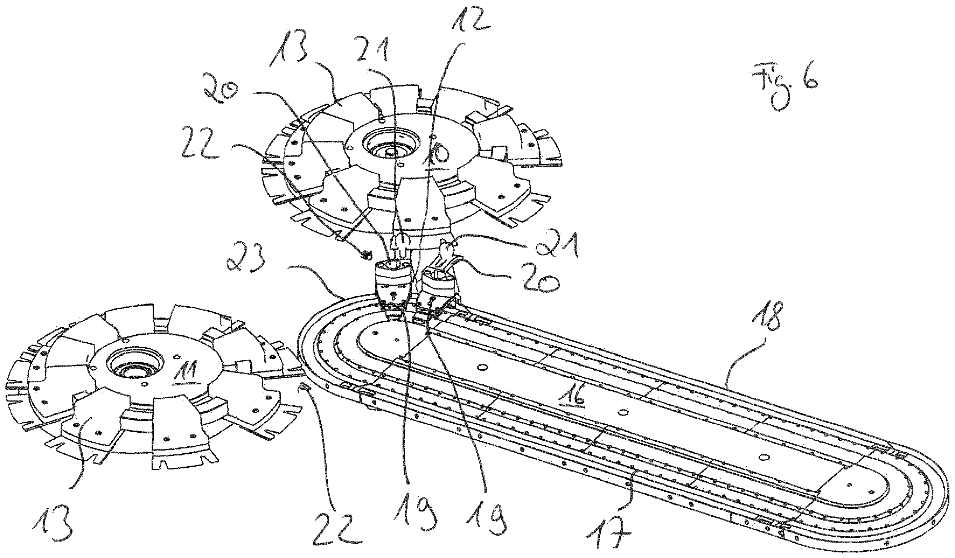

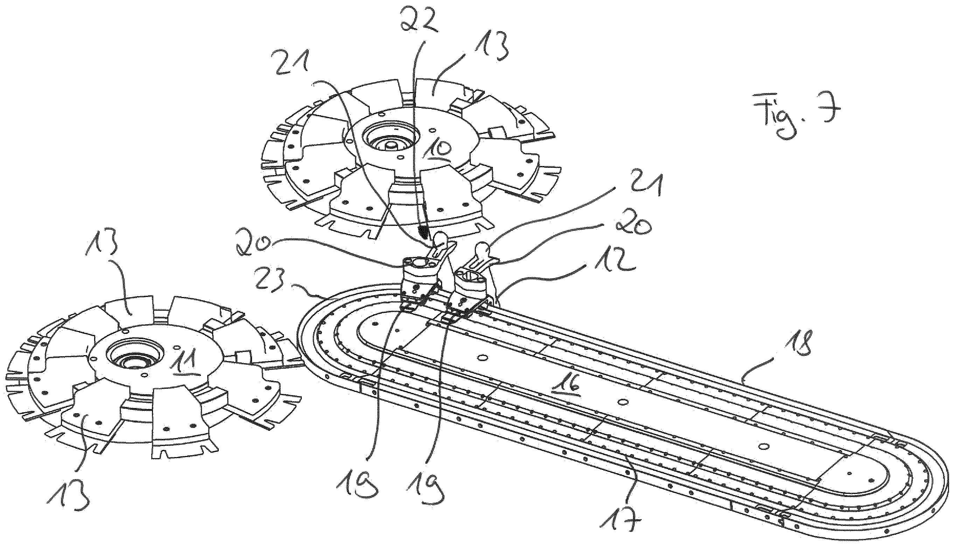

Figur 6 zeigt, wie der vorauseilende der Läufer 19 bereits das erste der Geflügelbeine 21 übernommen hat, während nun das zweite der Geflügelbeine 21 von der Hängeaufnahme 13 der Rundläufereinrichtung 11 an das Halteelement 20 des nacheilenden Läufers 19 überführt wird. In den Figuren 6 und 7 wird gezeigt, wie die Geflügelbeine 21 die Hängeaufnahmen 13 endgültig verlassen und nun mittels der Läufer 19 in deren Halteelemente 20 eingehängt mittels der Linearmotor-Fördereinrichtung 16 weiter gefördert werden.

Ab dem Zeitpunkt des Verlassens des Überführungsbereichs 22 endet die zuvor beschriebenen Zwangssynchronisation zwischen den Läufern 19 und der Rundläufereinrichtung 10. D. h. die Steuereinrichtung ist eingerichtet, die Läufer 19 bedarfsgemäß entlang der umlaufenden Förderstrecke 17 mit beliebigen Geschwindigkeiten losgelöst von der Umlaufgeschwindigkeit der Rundläufereinrichtungen 10, 11 zu fördern. So können die Geflügelkörper 12 zu Bearbeitungszwecken an der Bearbeitungsstation 24 beispielsweise für unterschiedlich lange Zeiten angehalten werden, ohne dass dies Einfluss auf die Fördergeschwindigkeit der Hauptförderlinie 14 hat. Dies eröffnet die Möglichkeit einer hoch qualitativen Bearbeitung der Geflügelkörper 12. Aufgrund der Entkopplung von einem andernfalls durch die Fördergeschwindigkeit der Hauptförderlinie 14 vorgegebenen zeitlichen Bearbeitungsfenster innerhalb dessen die Bearbeitungsschritte auszuführen wären, bietet die vorliegende Erfindung den Vorteil, dass die Bearbeitung individualisiert und für jeden einzelnen der Geflügelkörper 12 in optimaler Weise durchführbar ist. Die Figuren 9 und 10 zeigen ergänzend jeweils Draufsichten der in den Figuren 4 und 7 gezeigten Übergabestadien.

Wie in der Zeichnung gezeigt ist die Rundläufereinrichtung 10 zum Überführen der Geflügelkörper 12 an die Linearmotor-Fördereinrichtung 16 eingerichtet. Eine zweite Rundläufereinrichtung 11 ist zum Überführen der Geflügelkörper 12 von der Linearmotor-Fördereinrichtung 16 an die zweite Rundläufereinrichtung 11 ausgebildet. Mit anderen Worten ist die Rundläufereinrichtung 10 zum Abnehmen der Geflügelkörper 12 von der Hauptförderlinie 14 sowie zur anschließenden Überführung derselben an die Linearmotor-Fördereinrichtung 16 ausgebildet. Die zweite Rundläufereinrichtung 11 ist eingerichtet, die Geflügelkörper 12 von der Linearmotor-Fördereinrichtung zu übernehmen und diese anschließend an die Hauptförderlinie 14 oder an weitere - in der Zeichnung nicht gezeigte - Förderlinien zurückzuführen.

Die zuvor gemachten Ausführungen zu der erfindungsgemäßen Anordnung gelten in analoger Weise auch für die erfindungsgemäße Vorrichtung, die zentraler Bestandteil der zuvor beschriebenen Anordnung ist. Zur Vermeidung von Wiederholungen wird hinsichtlich der erfindungsgemäßen Vorrichtung daher auf die entsprechenden Passagen weiter oben verwiesen und die erfindungsgemäße Vorrichtung im Folgenden in Kürze nur ergänzend beschrieben.

Die erfindungsgemäße Vorrichtung ist zur Hängeförderung von Schlachtgeflügel in Form von Geflügelkörpern 12 entlang des Förderweges in einer Geflügelbearbeitungsanlage ausgebildet. Die Vorrichtung umfasst mindestens eine der Linearmotor-Fördereinrichtungen 16 mit einem Linearantrieb. Die Linearmotor-Fördereinrichtung 16 umfasst weiter die zuvor beschriebene umlaufenden Führungsschiene 18 sowie eine Mehrzahl von entlang der Führungsschiene 18 mittels des Linearantriebs jeweils separat steuerbewegbar ausgebildeten Läufern 19. An jedem der Läufer 19 ist jeweils eines der Halteelemente 20 angeordnet, die zur Aufnahme jeweils eines der Geflügelbeine 21 eingerichtete sind.

Mittels der zur Ansteuerung des Linearantriebs eingerichteten Steuereinrichtung werden die Läufer 19 paarweise bewegt und so die Geflügelkörper 12 steuervariabel gefördert. Jeweils zwei benachbarte Läufer 19 bilden auf diese Weise ein Läuferpaar.

Die Läufer 19 und/oder die Linearmotor-Fördereinrichtung 16 umfassen jeweils die zuvor genannten Positionsverfolgungsmittel zur Ermittlung der jeweiligen Läuferposition. Die Steuereinrichtung ist ausgebildet, den Linearantrieb derart anzusteuern, dass jeweils der Abstand zwischen den Läufern 19 eines der Läuferpaare zumindest im Wesentlichen einem vorgegebenen Läuferpaarabstand entspricht.

Die Position und/oder die Geschwindigkeit mindestens eines der Läufer 19 jeweils eines der Läuferpaare werden auf Basis einer Positionssollvorgabe und/oder einer Geschwindigkeitssollvorgabe mittels der hierzu ausgebildeten Steuereinrichtung gesteuert. Vorzugsweise ist die Steuereinrichtung weiter eingerichtet, die Position und/oder die Geschwindigkeit des jeweils anderen Läufers 19 jeweils eines der Läuferpaare unter Einhaltung des jeweiligen Läuferpaarabstandes nachzuführen.

Das erfindungsgemäße Verfahren zur Übergabe von Schlachtgeflügel zwischen Förderlinien in einer Geflügelbearbeitungsanlage ergibt sich aus den obigen Ausführungen zur erfindungsgemäßen Anordnung, weshalb im Folgenden nur ergänzend zu einigen ausgewählten Aspekten des erfindungsgemäßen Verfahrens Stellung genommen wird.

Das erfindungsgemäße Verfahren umfasst folgende Schritte: Fördern von Schlachtgeflügel bzw. der Geflügelkörpern 12 mittels mindestens einer zur Hängeförderung des Schlachtgeflügels ausgebildeten Rundläufereinrichtung 10 entlang einer gekrümmten Förderstrecke, wobei die Geflügelkörper 12 von einer Mehrzahl von Hängeaufnahmen 13 der Rundläufereinrichtung 10 jeweils beidbeinig gehalten werden; Fördern des Schlachtgeflügels bzw. der Geflügelkörper 12 mittels der einen Linearantrieb umfassenden Linearmotor-Fördereinrichtung 16 entlang einer durch die Führungsschiene 18 gebildeten umlaufenden Förderstrecke 17 durch gesteuertes Bewegen einer Mehrzahl entlang der Führungsschiene 18 mittels des Linearantriebs jeweils separat steuerbewegbar angeordneten Läufern 19, wobei jeweils ein Geflügelbein 21 mittels jeweils an jedem der Läufer 19 angeordneten Halteelementen 20 gehalten wird; Übergeben des Schlachtgeflügels bzw. der Geflügelkörper 12 zwischen den Förderlinien durch zumindest teilweises Überlappen der gekrümmten Förderstrecke der Rundläuferfördereinrichtung 10 mit einem Kurvenabschnitt der umlaufenden Förderstrecke 17 in dem Überführungsbereich 22. Vorzugsweise wird jeweils einer der Geflügelkörper 12 durch paarweises Bewegen eines Läuferpaares steuervariabel gefördert. Bevorzugt wird die jeweilige Läuferposition mittels Positionsverfolgungsmitteln erfasst und bestimmt.

Wie zuvor beschrieben wird der Abstand zwischen den Läufern 19 eines der Läuferpaare derart mittels der Steuereinrichtung gesteuert, dass dieser exakt oder im Wesentlichen einem vorgegebenen Läuferpaarabstand entspricht. Die Position und/oder die Geschwindigkeit eines der Läufer 19 jeweils eines der Läuferpaare wird auf Basis der Positionssollvorgabe und/oder der Geschwindigkeitssollvorgabe gesteuert. Die Position und/oder die Geschwindigkeit des jeweils anderen Läufers 19 wird unter Einhaltung des jeweiligen Läuferpaarabstandes mittels der Steuereinrichtung nachgeführt.

Vorzugsweise wird die Rundläufereinrichtung 10 mit zumindest im Wesentlichen konstanter Umlaufgeschwindigkeit mittels eines Antriebsaggregats angetrieben, und deren Winkelposition, die Ist-Umlaufgeschwindigkeit und die jeweilige aktuelle Position mindestens einer der Hängeaufnahmen 13 mittels Sensormitteln erfasst und an die Steuereinrichtung weitergeleitet.

Position und/oder Geschwindigkeit der Läufer 19 eines Läuferpaares werden mittels der Steuereinrichtung basierend auf der erfassten Ist-Umlaufgeschwindigkeit und der ermittelten aktuellen Position der mindestens einen Hängeaufnahme 13 derart gesteuert, dass jeweils einer der Läufer 19 zur Einzelbeinübergabe und der jeweiligen Hängeaufnahme 13 der Rundläufereinrichtung 10 zeitgleich in dem Überführungsbereich 22 aufeinander treffen. Die hierzu erforderliche zeitliche Abstimmung sowie Vorgabe eines Bewegungsprofils der Läufer 19 ist im Zusammenhang mit der erfindungsgemäßen Anordnung im Detail beschrieben.

Die Geflügelkörper 12 werden vorzugsweise einerseits von der Rundläufereinrichtung 10 an die Linearmotor-Fördereinrichtung 16 überführt, während andererseits das Überführen der Geflügelkörper 12 von der Linearmotor-Fördereinrichtung 16 zurück an die Hauptförderlinie 14 mittels der zweiten Rundläufereinrichtung 11 erfolgt.

Die vorliegende Erfindung umfasst zudem ein Verfahren zur Hängeförderung von Schlachtgeflügel entlang eines Förderweges in einer Geflügelbearbeitungsanlage. Dieses Verfahren ist bereits im Zusammenhang mit der erfindungsgemäßen Vorrichtung erläutert worden, so dass im Folgenden lediglich ergänzende Ausführungen hierzu gemacht werden.

Das Verfahren umfasst das Fördern des Schlachtgeflügels bzw. der Geflügelkörper mittels der den Linearantrieb umfassenden Linearmotor-Fördereinrichtung 16 entlang der umlaufenden Förderstrecke 17, die durch die Führungsschiene 18 gebildet wird. Die Geflügelkörper 12 werden durch gesteuertes Bewegen einer Mehrzahl entlang der Führungsschiene 18 mittels des Linearantriebs jeweils separat steuerbewegbar angeordneten Läufern 19 gefördert. Die Geflügelbeine 21 werden mittels jeweils an den Läufern 19 angeordneten Halteelementen 20 gehalten.

Der Linearantrieb wird mittels der Steuereinrichtung derart gesteuert, dass jeweils einer der Geflügelkörper 12 durch paarweises Bewegen eines Läuferpaares gefördert wird. Die Läuferposition wird mittels Positionsverfolgungsmitteln ermittelt und an die Steuereinrichtung zur Weiterverarbeitung geleitet. Der Abstand zwischen den Läufern 19 eines der Läuferpaare wird auf diese Weise so gesteuert, dass dieser zumindest im Wesentlichen dem vorgegebenen Läuferpaarabstand entspricht. Vorzugsweise wird/ werden Position und/oder Geschwindigkeit mindestens eines der Läufer 19 jeweils eines der Läuferpaare auf Basis einer Positionssollvorgabe und/oder einer Geschwindigkeitssollvorgabe gesteuert. Weiter bevorzugt wird/werden Position und/oder Geschwindigkeit des jeweils anderen Läufers 19 jeweils eines der Läuferpaare unter Einhaltung des jeweiligen Läuferpaarabstandes mittels der Steuereinrichtung nachgeführt.

## Patentansprüche

1. Vorrichtung zur Hängeförderung von Schlachtgeflügel entlang eines Förderweges in einer Geflügelbearbeitungsanlage, umfassend
mindestens eine Linearmotor-Fördereinrichtung (16) mit einer einen Linearantrieb umfassenden umlaufenden Führungsschiene (18) sowie einer Mehrzahl an entlang der Führungsschiene (18) mittels des Linearantriebs jeweils separat steuerbewegbar ausgebildeten Läufern (19),
zur Aufnahme jeweils eines Geflügelbeines (21) eingerichtete Halteelemente (20), wobei an jedem der Läufer (19) jeweils eines der Halteelemente (20) angeordnet ist,
eine zur Steuerung des Linearantriebs ausgebildete Steuereinrichtung, die zum steuervariablen Fördern jeweils eines Geflügelkörpers (12) durch paarweises Bewegen eines Läuferpaares einrichtet ist, wobei das Läuferpaar jeweils zwei benachbarte der Läufer (19) umfasst.

2. Vorrichtung nach Anspruch 1, **dadurch gekennzeichnet, dass** die Läufer (19) jeweils Positionsverfolgungsmittel zur Ermittlung der jeweiligen Läuferposition umfassen.

3. Vorrichtung nach einem der Ansprüche 1 oder 2, **dadurch gekennzeichnet, dass** die Steuereinrichtung eingerichtet ist, den Linearantrieb derart anzusteuern, dass jeweils der Abstand zwischen den Halteelementen (20) der Läufer (19) eines der Läuferpaare zumindest im Wesentlichen einem vorgegebenen Läuferpaarabstand entspricht.

4. Vorrichtung nach Anspruch 3, **dadurch gekennzeichnet, dass** die Steuereinrichtung eingerichtet ist, die Position und/oder die Geschwindigkeit mindestens eines der Läufer (19) jeweils eines der Läuferpaare auf Basis einer Positionssollvorgabe und/oder einer Geschwindigkeitssollvorgabe zu steuern.

5. Vorrichtung nach Anspruch 4, **dadurch gekennzeichnet, dass** die Steuereinrichtung weiter eingerichtet ist, die Position und/oder die Geschwindigkeit des jeweils anderen Läufers (19) jeweils eines der Läuferpaare unter Einhaltung des jeweiligen Läuferpaarabstandes nachzuführen.

6. Verfahren zur Hängeförderung von Schlachtgeflügel entlang eines Förderweges in einer Geflügelbearbeitungsanlage, umfassend
Fördern des Schlachtgeflügels mittels einer einen Linearantrieb umfassenden Linearmotor-Fördereinrichtung (16) entlang einer durch eine Führungsschiene (18) gebildeten umlaufenden Förderstrecke (17) durch gesteuertes Bewegen einer Mehrzahl entlang der Führungsschiene (18) mittels des Linearantriebs jeweils separat steuerbewegbar angeordneten Läufern (19), wobei jeweils ein Geflügelbein (21) mittels jeweils an jedem der Läufer (19) angeordneten Halteelementen (20) gehalten wird,
Steuern des Linearantriebs mittels einer Steuereinrichtung derart, dass jeweils einer der Geflügelkörper (12) durch paarweises Bewegen eines Läuferpaares steuervariabel gefördert wird, wobei das Läuferpaar jeweils zwei benachbarte der Läufer (19) umfasst.

7. Verfahren nach Anspruch 6, **gekennzeichnet durch** Ermitteln der jeweiligen Läuferposition mittels Positionsverfolgungsmitteln.

8. Verfahren nach einem der Ansprüche 6 oder 7, **gekennzeichnet durch** Steuern des Linearantriebs mittels der Steuereinrichtung derart, dass jeweils der Abstand zwischen den Läufern (19) eines der Läuferpaare zumindest im Wesentlichen einem vorgegebenen Läuferpaarabstand entspricht.

9. Verfahren nach Anspruch 8, **gekennzeichnet durch** Steuern der Position und/ oder der Geschwindigkeit mindestens eines der Läufer (19) jeweils eines der Läuferpaare auf Basis einer Positionssollvorgabe und/oder einer Geschwindigkeitssollvorgabe.

10. Verfahren nach Anspruch 9, **gekennzeichnet durch** Nachführen der Position und/oder der Geschwindigkeit des jeweils anderen Läufers (19) jeweils eines der Läuferpaare unter Einhaltung des jeweiligen Läuferpaarabstandes mittels der Steuereinrichtung.
